# EUROPEAN PATENT APPLICATION

(11) **EP 3 192 960 A1**
(43) Date of publication of application: **19.07.2017**
(21) Application number: 16150967.4
(22) Date of filing: 12.01.2016
(51) Int. Cl.: E06B 3/02, E06B 3/66, E06B 3/673

(54) **INSULATING GLASS UNIT AND METHODS TO PRODUCE IT**

(71) Applicant: AGC Glass Europe, 1348 Louvain-la-Neuve (BE)
(72) Inventor: CHORINE, Nicolas, 1490 Court-Saint-Etienne (BE); BOUESNARD, Olivier, 1460 Ittre (BE); CUMPELIK, Pavel, 41742 Krupka (CZ); BAELUS, Stijn, 2440 Geel (BE)
(74) Representative: Chabou, Samia

(57) **Abstract**

Insulating glass unit (IGU) comprising at least a first glass plate (1), a second glass plate (2), a spacer (3) and an edge element (4), wherein
- said spacer (3) is fastened to said first glass plate (1) by means of a first immediate tack and green strength structural adhesive seal (51), said edge element (4) being fastened to said first glass plate (1) by means of a second immediate tack and green strength structural adhesive seal (52);
- one of said spacer (3) and said edge element (4) is fastened to said second glass plate (2) by means of a third immediate tack and green strength structural adhesive seal (53), the other one of said spacer (3) and said edge element (4) being fastened to said second glass plate (2) by means of a compressible adhesive seal (6).

## Description

The invention relates to an insulating glass unit (IGU) for windows and doors comprising at least two glass panels, particularly frameless windows and doors.

The invention also relates to methods to produce such insulating glass unit (IGU).

The invention also relates to the windows and doors comprising the insulating glass units (IGU) according to the invention.

Frameless windows and doors are known to improve window to wall ratio (WWR) by increasing the size of transparent surface compared to classical windows and doors. The word "frameless" herein means that the casement of the door or window has a larger transparent surface compared to a standard door or window by elimination of some or all frame parts. In a frameless window, window hardware is usually integrated into the glazing or so-called insulating glass unit (IGU) to hold it. An insulating glass unit comprises at least two glass plates separated by a vacuum or gas filled space to reduce heat transfer across the window. Window hardware or fittings are these metallic parts (levers, sliding support...) which are, in traditional windows, positioned between the casement frame and fixed frame, and by means of which the casement can be opened or closed. The main challenge of such frameless window concept is to identify the right way to connect the IGU to the fixed frame to offer a complete frameless aspect or glassy look - either the window is closed or open - while keeping reasonable insulation and tightness performances to address most of exterior applications.

Document BE1010537 discloses a process to manufacture an IGU wherein an edge element is installed between the glass plates of the said IGU. The edge element is used to receive fastening or fixing means to fix the IGU on a fixed frame. In the described process, the edge element is first fastened to a first glass plate thanks to a double side mounting tape. In a second step, a spacer frame is coated with polyisobutylene before being fastened on its first side to the first glass plate. The second glass plate is then pressed against the other side of the spacer such to define an insulated space between the two glass plates. Afterwards a sealant is injected through a gap between the edge element and the second glass plate. The edge element is indeed shaped and sized such that it does not constitute a bridge between the two glass plates, precisely so as to allow the injection of a viscous structural sealant between the spacer and the edge element. Such structural sealant will be able to sustain the mechanical constraints induced by the weight of the glass plates, the thermal expansion or contraction, the wind or the like and needs consequently to have a high elastic limit. Typically the structural sealant is a two components silicone based adhesive. Such structural sealant is however expensive and represents a significant cost in the IGUs from the prior art due to the large volume occupied by said sealant.

Document EP2402540 discloses a method to manufacture IGUs for frameless windows wherein the edge element is placed between the glass plates and glued to each of the glass plates after the IGU has been sealed. The edge element can be fastened to the glass plates thanks to a two components structural sealant with a high cost. Compared to the other prior art, the quantity of structural sealant required by this method is reduced because no injection of structural sealant between the spacer and the edge element is required. The fastening of the edge element thanks to a structural sealant however requires maintaining the IGU horizontally during the curing time of the sealant. The gluing of the edge element in a structural sealant also involves a reduced accuracy in its positioning on the glass panels because sealant behaves like a paste when it is not cured. Thus glued piece could move it is not fixed or if IGU is placed vertically. Furthermore the empty space between the spacer and the edge element observed in this prior art can become a trap for water which will condensate and eventually attack the structural sealant or the IGU sealant during IGU lifetime.

It is an object of the invention to remedy to the drawbacks of the aforementioned prior art.

It is thus an object of the invention to provide an insulating glass unit (IGU) for doors or windows according to claim 1, which eliminates the need of using the two components structural sealants of the art while keeping a reduced duration for the process and an accurate positioning of the edge element on the glass plates.

For sake of clarity, by green strength of an adhesive, it is meant its resistance to deformation and fracture without curing, but after pressing it. By immediate tack it is meant the ability of an adhesive material to resist separation after bringing it into contact with a surface for a short time under a light pressure. By compressible seal, it is meant that the seal can be deformed and can maintain this deformation with a very low force. By structural material, it is meant a material with the ability to sustain mechanical constraints induced by the weight of the glass plates, the thermal dilatation or contraction, the wind or the like. A material having structural properties needs consequently to have a high elastic limit.

In the present invention, the immediate tack and green strength structural adhesive seals can be the same or can be different.

In an embodiment of the invention, at least one of said immediate tack and green strength structural adhesive seals comprises a double side mounting tape or a curable thermoplastic sealant that becomes structural when cured.

In another embodiment, at least one of said immediate tack and green strength structural adhesive seals comprises a double side mounting tape and at least another one of said immediate tack and green strength structural adhesive seals comprises a curable thermoplastic sealant that becomes structural when cured.

It is understood that different types of glass are suitable as glass plates in the frame of the present invention. The glass plates used can for example be made of safety glass of two types: tempered glass or laminated glass, which are known to the skilled people. The glass plates can optionally be edge-ground. Other options, such as heat insulation with low-e coatings, solar control coatings, reinforced acoustic insulation with acoustic laminated glass are also compatible with the present concept to improve the performances of the window or door. Glass plates with electrochromic, thermochromic, photochromic or photovoltaic elements are also compatible with the present invention. The different glass plates of the IGU according to the present invention can be of the same or of a different type. At least one of the glass plates of the IGU can optionally be partly coated with a layer of enamel or organic ink. This layer can have an aesthetic function by concealing the IGU spacer and the edge element from the view of the people looking through the window or door comprising the IGU according to the invention. In other embodiments of the invention, glass plates are not coated with a layer of enamel or organic ink. In other embodiments, the different glass plates of the IGU can have different dimensions.

In the present invention, the edge element can have different uses, for example:
- to receive fastenings or fixing means to connect the IGU with another IGU, with a frame or with a building structure;
- to strengthen the IGU and reduce its deflection;
- to make a seal between the IGU and another IGU, a frame or a building structure;
- to protect the edge of the IGU;
- to put some cables or wires.

In this regard, the edge element can be protruding from the IGU, for example to make a seal with surrounding parts.

It is another object of the invention to provide methods to produce IGUs according to the invention.

To this end, there is provided the methods to produce IGUs according to claims 13, 14 and 15 and which are linked by the same inventive concept.

The invention also relates to windows or doors comprising the IGUs according to the invention.

More particularly, the invention also relates to frameless windows or doors comprising the IGUs according to the invention. By frameless, it is meant that the casement of the door or window has a larger transparent surface compared to a standard door or window by elimination of some or all frame parts. In standard doors or windows, fastening or fixing means are positioned between the casement frame and fixed frame. In frameless windows or doors according to the present invention, fastening or fixing means are fastened to the edge element of the IGUs allowing to eliminate some or all the frame parts of the casement. Such fastening or fixing means are windows hardware.

The invention will be better understood upon reading the following description in view of the attached figures that will in no way limit the scope of the invention and wherein:
- Fig. 1: shows a sectional view of an edge of an IGU according to a first embodiment of the invention;
- Fig. 2: shows a sectional view of an edge of an IGU according to a second embodiment of the invention;
- Fig. 3: shows an embodiment of the method to produce IGUs according to the invention;

The figures are not drawn to scale. Generally, identical components are denoted by the same reference numerals in the figures.

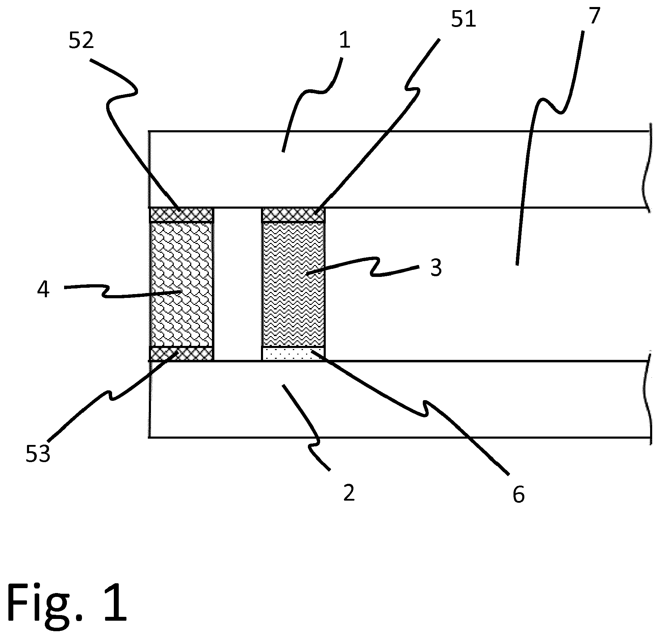

Fig. 1 shows a sectional view of an edge of an IGU according to a first embodiment of the invention. The IGU comprises two glass plates 1 and 2, one spacer 3 and one edge element 4.

In the present invention, the spacer 3 delimits an insulated cavity 7 between the first glass plate 1 and a second glass plate 2. The spacer 3 has consequently a surrounding shape which spaces apart the glass plates 1 and 2 on their edge. It can be made of one piece or can alternatively comprise a plurality of elements having their extremities abutted to form the surrounding shape. The spacer 3 can be metallic, polymeric, a composite material reinforced by glass fibres or a mix of several of these materials. The spacer 3 can be hollow in order to be able to receive for example some drying material. Such spacer 3 is then perforated to allow the drying material to trap water vapor that is coming in the cavity of the IGU. In a particular embodiment, the spacer 3 is made of a transparent material. In this case, the green strength and immediate tack structural adhesive 51 is also made of a transparent material. Preferably, all the elements between the transparent spacer 3 and the glass plates 1 and 2 are made of transparent materials. The advantage of this embodiment is to increase the size of transparent surface of the IGU compared to classical non transparent spacers.

The spacer 3 is fastened to the first glass plate 1 by means of first immediate tack and green strength structural adhesive seal 51.

In the present invention, the adhesive 51 can comprise a double side mounting tape, comprising for example a polyurethane foam carrier and an acrylate based adhesive, an acrylic foam carrier and an acrylate based adhesive or a curable thermoplastic sealant. Such sealant will start to cure after application in contact with ambient atmosphere to become structural after curing.

The immediate tack and green strength structural adhesive seal 51 will allow a very accurate positioning and instantaneous fastening of the spacer 3 to the first glass plate 1. The structural properties of the adhesive 51 will furthermore provide a rigid fastening of the spacer 3 to the IGU.

The spacer 3 is fastened to the second glass plate by means of a compressible adhesive seal 6.

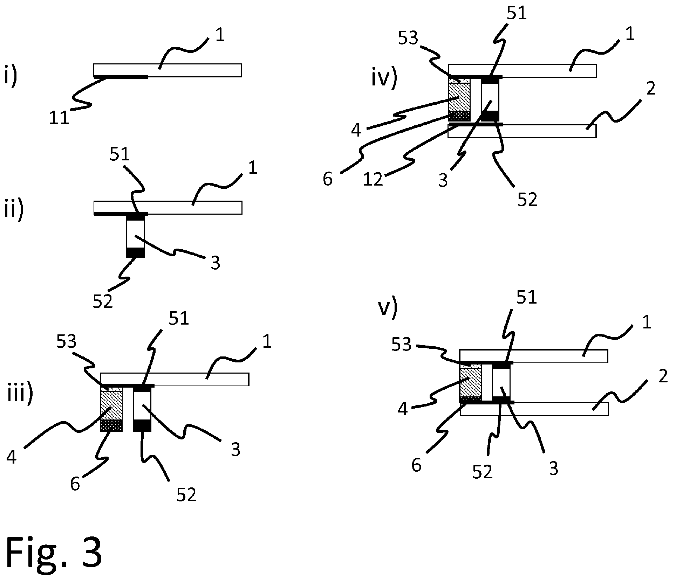

In the present invention, the compressible adhesive seal 6 can be a double side soft foam tape, for example a polyethylene foam carrier and an acrylate based adhesive, or alternatively a thermoplastic sealant. A characteristic of this compressible adhesive seal 8 is its capacity to deform itself and to maintain this deformation with a very low force. The importance of such feature will be understood further in the text when describing Fig. 3.

In the present invention, the edge element 4 can either be a continuous peripheral element with a structure surrounding the spacer 3 or can comprise a plurality of disconnected elements placed in the periphery of the spacer 3. Furthermore, the edge element 4 can be hollow or filled. The edge element can have different shapes. It can for instance be U-shaped what is interesting in the case of a frameless window or door as it can receive the fastening or fixing means. Any shape that can fulfil this function is also suitable for frameless window or door. Advantageously, it comprises two opposite surfaces to bond the edge element 4 to the two glass planes 1 and 2. The edge element 2 can be metallic, polymeric, in composite materials reinforced by glass fibres or a mix of several of these materials.

As already explained above, the edge element 4 can have different uses, for example:
- to receive fastenings or fixing means to connect the IGU with another IGU, with a fixed frame or with a building structure;
- to strengthen the IGU and reduce its deflection;
- to make a seal between the IGU and another IGU, a frame or a building structure;
- to protect the edge of the IGU;
- to put some cables or wires.

In this regard, the edge element 2 can be protruding from the IGU, for example to make a seal with surrounding parts.

The edge element 4 is fastened to the first glass plate 1 by means of a second immediate tack and green strength structural adhesive seal 52 and to the second glass plate 2 thanks to a third immediate tack and green strength structural adhesive seal 53. The immediate tack and green strength structural adhesive seals 52 and 53 will allow a very accurate positioning and instantaneous fastening of the edge element 4 to the glass plates 1 and 2. The structural properties of seals 52 and 53 will on the other hand ensure the mechanical cohesion of the whole IGU according to the invention by sustaining the mechanical constraints induced by the glass own weight, the difference of thermal expansion of the different parts of the IGU, the force of the wind...

The seals 51, 52 and 53 can be made of the same adhesive or alternatively can be made of different adhesives.

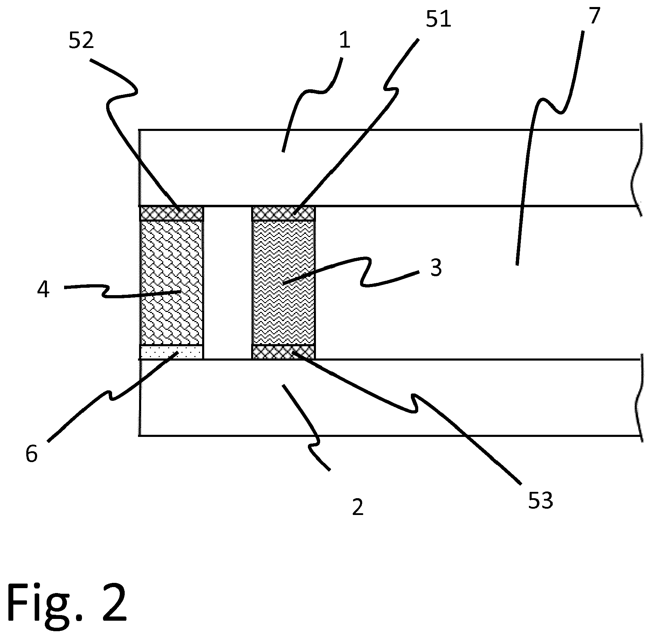

Fig. 2 shows a sectional view of an edge of an IGU according to a second embodiment of the invention. The difference with the first embodiment described above is that in this second embodiment, the spacer 3 is fastened to the second glass plate 2 by means of an immediate tack and green strength adhesive seal 53 while the edge element 4 is fastened to second glass plate 2 thanks to a compressible adhesive seal 6.

In this embodiment, the rigid fastening of the edge element 4 is ensured by the immediate tack and green strength adhesive seal 52, while the mechanical cohesion of the whole IGU will be ensured by the structural seals 51 and 53 between the spacer 3 and respectively the first glass plate 1 and second glass plate 2.

The general principle of the invention relies on the fact that one of the spacer 3 and the edge element 4 will be fastened to both the first and second glass plates 1 and 2 by means of structural seals, which will ensure the mechanical cohesion of the IGU and consequently eliminate the necessity to inject a structural sealant between the spacer 3 and the edge element 4 as in the prior art. The other one of the spacer 3 and the edge element 4 will on the other hand be rigidly fastened to either the first glass plate 1 or second glass plate 2 thanks to a third structural seal, while the compressible seal 6 will confer a degree of freedom allowing an efficient and reliable manufacturing of the IGUs according to the invention (see below for more details). The immediate tack and green strength features of the adhesive seals 51, 52 and 53 will furthermore allow a very accurate positioning and quick fastening of the spacer 3 and edge element 4.

In the embodiments of Fig. 1 and Fig. 2, the spacer 3 and edge element 4 are spaced apart. They can however contact each other in other embodiments, what will prevent water to condensate between the spacer 3 and edge element 4.

Furthermore, a third glass plate can be fastened to the first glass plate 1 or second glass plate 2 in order to obtain a triple glazing IGU.

Fig. 3 shows an embodiment of the method to produce IGUs according to the invention.

At step i), a first glass plate 1 comprising an enamelled area 11 over its entire periphery is disposed.

At step ii), a spacer 3 covered with a double side mounting tape 51 on its first side is positioned on said enamelled area 11 of the first glass plate 1.

The double side mounting tape 51 comprises an immediate tack and green strength structural adhesive for example a polyurethane foam carrier and an acrylate based adhesive or an acrylic foam carrier and an acrylate based adhesive.

The other side of the spacer 3 is also covered with a double side mounting tape 52 comprising an immediate tack and green strength structural adhesive.

Although in Fig. 3 the same double side mounting tape is used for both sides 51 and 52 of the spacer 1, in other embodiments, different adhesives can be used for each side of the spacer 3.

At step iii), the first side of an edge element 4 is positioned on the first glass plate 1 with a double side mounting tape 53 in between. The double side mounting tape 53 comprises an immediate tack and green strength structural adhesive. In Fig. 3, the double side mounting tape 53 is different from double side mounting tapes 51 and 52 covering the spacer, but in other embodiments, similar double side mounting tapes can be used for both the spacer 3 and the edge element 4. In general, the immediate tack and green strength structural adhesive seals (51, 52, 53) can be the same or can be different

The layer of immediate tack and green strength structural adhesive 53 will allow a very accurate positioning of the edge element 4 while also making possible to store the IGU in a vertical position right after the positioning of the edge element 4.

The opposite side of the edge element 4 is covered with a compressible adhesive seal 6.

The compressible adhesive seal 6 can be a double side soft mounting tape, for example a polyethylene foam carrier and an acrylate adhesive, or alternatively a thermoplastic sealant. The compressible adhesive seal 6, on one hand, holds the edge element 4 in position. Another characteristic of this compressible adhesive seal 6 is its capacity to deform itself and to maintain this deformation with a very low force.

At step iv), a second glass plate 2 also comprising an enamelled area 12 is placed parallel to the assembly obtained at step iii). At step iv) an insulating gas can optionally be injected between the two glass plates 1 and 2, as an advantageous embodiment of the invention.

At step v), both glass plates 1, 2 are pressed in order to reach the requisite distance between said glass plates 1 and 2 before releasing the pressure. During this step, the compressible adhesive seal 6 deforms itself and maintains its deformation in order not to stretch or even destroy the IGU double seal between the spacer 3 and glass plates 1 and 2.

During this step, the second glass plate 2 is fastened to the IGU spacer 1 by means of the double side mounting tape 52 and to the edge element 2 thanks to the compressible adhesive seal 6. The double side mounting tape 51 and 52 on both sides of the IGU spacer constitutes an IGU double seal preventing water vapor to get in the IGU cavity and potentially to keep an insulating gas inside the IGU cavity. Additional sealing means to the IGU double seal can be provided in order to increase its tightness capabilities.

The enamelled areas 11 and 12 will have an aesthetic function by concealing the IGU spacer 3 and the edge element 4 from the view of the people looking through the window or door comprising the IGU according the invention. It is however understood that in other embodiments of the method of the invention, the glass plates do not comprise enamelled areas.

In other embodiments of the method to produce IGUs according to the invention, the order of steps ii) and iii) can be reversed. The spacer 3 can also for instance be fastened to the first glass plate 1 or to the second glass plate 2 by means of a compressible adhesive seal 6, the edge element 4 being in this case fastened to both the first glass plate 1 and second glass plate 2 thanks to an immediate tack and green strength adhesive.

## Claims

1. Insulating glass unit (IGU) comprising at least a first glass plate (1), a second glass plate (2), a spacer (3) and an edge element (4), **characterized in that**
- said spacer (3) is fastened to said first glass plate (1) by means of a first immediate tack and green strength structural adhesive seal (51), said edge element (4) being fastened to said first glass s plate (1) by means of a second immediate tack and green strength structural adhesive seal (52);
- one of said spacer (3) and said edge element (4) is fastened to said second glass plate (2) by means of a third immediate tack and green strength structural adhesive seal (53), the other one of said spacer (3) and said edge element (4) being fastened to said second glass plate (2) by means of a compressible adhesive seal (6).

2. Insulating glass unit (IGU) according to claim 1, **characterized in that** at least one of said immediate tack and green strength structural adhesive seals (51, 52, 53) comprises a double side mounting tape or a curable thermoplastic sealant that is structural when cured.

3. Insulating glass unit (IGU) according to claim 1 or 2, **characterized in that** at least one of said immediate tack and green strength structural adhesive seals (51, 52, 53) comprises a double side mounting tape and at least another one of said immediate tack and green strength structural adhesive seals (51, 52, 53) comprises a curable thermoplastic sealant that is structural when cured.

4. Insulating glass unit (IGU) according to claim 2 or 3, **characterized in that** said double side mounting tape comprises a polyurethane foam carrier and an acrylate based adhesive or an acrylic foam carrier and an acrylate based adhesive.

5. Insulating glass unit (IGU) according to anyone of the preceding claims, **characterized in that** said compressible adhesive seal (6) comprises a double side soft foam tape.

6. Insulating glass unit (IGU) according to claim 5, **characterized in that** said double side soft foam tape comprises a polyethylene foam carrier and an acrylate based adhesive.

7. Insulating glass unit (IGU) according to anyone of claims 1 to 4, **characterized in that** said compressible adhesive seal (6) comprises a thermoplastic sealant.

8. Insulating glass unit (IGU) according to anyone of the preceding claims, **characterized in that** said spacer (3) and edge element (4) contact each other.

9. Insulating glass unit (IGU) according to anyone of the preceding claims, **characterized in that** at least the spacer (3) and green strength and immediate tack structural adhesive (51) are transparent.

10. Insulating glass unit (IGU) according to anyone of the preceding claims, **characterized in that** it comprises a third glass plate fastened to the first or second glass plate (1, 2).

11. Window **characterized in that** it comprises an IGU according to anyone of claims 1 to 10.

12. Door **characterized in that** it comprises an IGU according to claim 1 to 10.

13. Method to produce an insulating glass unit (IGU) according to anyone of claims 1 to 10 comprising the following steps:
- Forming a first assembly by fastening to a first glass plate (1) a spacer (3) and an edge element (4), said spacer (3) being fastened by means of a first immediate tack and green strength structural adhesive (51), said edge element (4) being fastened by means of a second immediate tack and green strength structural adhesive (52);
- Fastening by pressing a second glass plate (2) to said first assembly, said second glass plate (2) being fastened to the spacer (3) and to the edge element (4), said edge element (4) being fastened by means of a third immediate tack and green strength structural adhesive (53), said spacer (3) being fastened by means of a compressible adhesive (6).

14. Method to produce an insulating glass unit (IGU) according to anyone of claims 1 to 10 comprising the following steps:
- Forming a first assembly by fastening to a first glass plate (1) a spacer (3) and an edge element (4), said spacer (3) being fastened by means of a first immediate tack and green strength structural adhesive (51), said edge element (4) being fastened by means of a second immediate tack and green strength structural adhesive (52);
- Fastening by pressing a second glass plate (2) to said first assembly, said second glass plate (2) being fastened to the spacer (3) and to the edge element (4), said spacer (3) being fastened by means of a third immediate tack and green strength structural adhesive (53), said edge element (4) being fastened by means of a compressible adhesive (6).

15. Method to produce an insulating glass unit (IGU) according to anyone of claims 1 to 10 comprising the following steps:
- Forming a first assembly by fastening to a first glass plate (1) a spacer (3) and an edge element (4), one of said spacer (3) and said edge element (4) being fastened by means of a first immediate tack and green strength structural adhesive (51), the other one of said spacer (3) and said edge element (4) being fastened by means of a compressible adhesive (6);
- Fastening by pressing a second glass plate (2) to said first assembly, said second glass plate (2) being fastened to the spacer (3) and to the edge element (4), said spacer (3) being fastened by means of a second immediate tack and green strength structural adhesive (52), said edge element (4) being fastened by means of a third immediate tack and green strength structural adhesive (53).
